Europäisches Patentamt

European Patent Office

Office européen des brevets

(11) Veröffentlichungsnummer : **0 054 775**
**B1**

(12) **EUROPÄISCHE PATENTSCHRIFT**

(45) Veröffentlichungstag der Patentschrift :
28.11.84

(51) Int. Cl.³ : **B 65 H 67/06**, B 65 G 47/24

(21) Anmeldenummer : **81110079.1**

(22) Anmeldetag : **02.12.81**

(54) **Vorrichtung zum Sortieren konischer Hülsen.**

(30) Priorität : **23.12.80 CH 9496/80**

(43) Veröffentlichungstag der Anmeldung :
**30.06.82 Patentblatt 82/26**

(45) Bekanntmachung des Hinweises auf die Patenterteilung : **28.11.84 Patentblatt 84/48**

(84) Benannte Vertragsstaaten :
**AT BE CH DE FR GB IT LI NL**

(56) Entgegenhaltungen :
**WO-A-80 /000 20**
**DE-A- 2 003 594**
**GB-A- 593 586**
**US-A- 3 389 777**
**US-A- 3 973 672**

(73) Patentinhaber : **MASCHINENFABRIK RIETER A.G.**
**Postfach 290**
**CH-8406 Winterthur (CH)**

(72) Erfinder : **Würmli, Arthur**
**Klosterstrasse 47**
**CH-8406 Winterthur (CH)**

**Beschreibung**

Die vorliegende Erfindung bezieht sich auf eine Vorrichtung zum Sortieren konischer Hülsen, welche eine Fördereinrichtung mit mindestens einer muldenförmigen Fördertasche umfaßt, welche zusammen mit je einer einzelnen, in sie eingelegten Hülse quer zu ihrer Längserstreckung bewegbar ist, und die Vorrichtung zudem ein Mittel umfaßt zum Verschieben der in die Fördertasche eingelegten Hülse in deren Längsrichtung in der einen bzw. in der entgegengesetzten Richtung in Abhängigkeit der relativen Lage von Hülsenfuß und Hülsenspitze.

An Textilmaschinen werden Hülsen zum Aufwickeln von Fäden und dergleichen in vielseitiger Weise verwendet. Es erweist sich dabei im allgemeinen als zweckmäßig, den Hülsen eine konische Form zu geben. Solche Hülsen müssen beim maschinellen Einsetzen derselben im Betrieb in der richtigen Lage vorgelegt werden. Insbesondere muß bei den Hülsen die Hülsenspitze in bezug auf den Hülsenfuß stets gleich liegen, d. h. die Hülsen müssen an der Einsatzstelle gleichsinnig oder endengleich orientiert sein.

Die Vorrichtung der vorliegenden Erfindung dient diesem Zweck, d. h. sie dient zum Sortieren von noch nicht endengleich angeordneten Hülsen.

Im Betrieb von beispielsweise Ringspinn- oder Ringzwirnmaschinen werden solche Hülsen aufeinanderfolgend auf das Transportband einer automatischen Kopsabziehvorrichtung aufgesetzt und später als bespulte Hülsen wieder weggeführt. Das Aufsetzen der Hülsen erfolgt automatisch, wobei diese aus einem Sammelbehälter entnommen werden. In diesem liegen die Hülsen wohl parallel zueinander, sind aber nicht endengleich sortiert. Beim Aufsetzen der konischen Hülsen auf das Transportband müssen aber die Hülsenenden mit dem großen Durchmesser (Hülsenfüße) auf die Zapfen des Transportbandes aufgesteckt werden. Eine wichtige Anwendung der erfindungsgemäßen Vorrichtung ist das Sortieren der Hülsen zum Zwecke, diese anschließend in endengleiche Positionen zu bringen und auf das Transportband aufzusetzen.

Durch die schweizerischen Patentschriften Nr. 457 223 und Nr. 507 863 und durch die deutsche Offenlegungsschrift Nr. 2 003 594 sind diesem Zwecke dienende Einrichtungen bereits bekannt geworden. Diesen haftet jedoch der Nachteil an, daß sie für Hülsen verschiedenen Durchmessers ungeeignet sind. Die Führungskanten bzw. Auswerfhefel gemäß diesen Veröffentlichungen, welche ein seitliches Verschieben der Hülsen bewirken, sind gemäß diesen Patentschriften in ihrer Höhe fixiert und somit nicht an verschiedene Hülsendurchmesser anpaßbar.

Eine Verbesserung dieser Verhältnisse wird durch die Vorrichtung gemäß der europäischen Patentanmeldung Nr. 0 016 041 erzielt. Bei dieser wird die Höhe der Führungskanten durch einen Stab festgelegt, welcher auf der mittleren Zone der Hülse aufliegt und dessen Höhe somit durch den mittleren Hülsendurchmesser gegeben ist. Es hat sich aber gezeigt, daß die Hülsen durch den aufliegenden Stab beim Verschieben etwas gebremst werden, was unerwünscht ist, da dadurch die Zuverlässigkeit der Arbeitsweise beeinträchtigt wird. Beim Verwenden von Führungskanten kommt es außerdem vor, daß bei einer Beschädigung des Hülsenfußes dieser unter die Führungskante gelangen oder sich verklemmen kann.

Durch die vorliegende Erfindung sollen die im Vorhergehenden erwähnten Nachteile vermieden werden. Diese ist dadurch gekennzeichnet, daß das Mittel zum Verschieben der Hülsen zwei auf die Fördereinrichtung aufsetzbare und in Rotationslagern gelagerte Rollen umfaßt, daß die Rotationslager an einem um eine Schwenkachse schwenkbaren Rahmen in gleichen Abständen von der Schwenkachse angebracht sind, daß die Schwenkachse parallel zur die Fördertasche bildenden Mulde ist, und daß die Rotationsachsen der Rollen auf derselben Seite einer die Rotationslager verbindenden Geraden eine gedachte, senkrecht zur Fördertasche stehende und diese halbierende Ebene durchstoßen.

Diejenige Rolle und nur diese, welche sich bei der Bewegung der Hülse über der Hülsenzone größeren Durchmessers befindet, kommt mit der Hülse in Kontakt, und nur diese Rolle kann eine seitliche Verschiebung der Hülse bewirken. Die Rollen müssen nicht mit den Hülsenenden zusammenwirken, sondern können entlang der Längsrichtung der Hülse in beliebigen Zonen zur Wirkung gelangen. Da Beschädigungen der Hülsen meistens an ihren Enden vorkommen, so ergibt sich hieraus eine verminderte Störanfälligkeit. An sich können die beiden Rollen sehr nahe beisammen sein. Ein gewisser Abstand ist jedoch aus Gründen einer erhöhten Zuverlässigkeit der Arbeitsweise empfehlenswert. Es ist aber von Bedeutung, daß die Hülsen bei ihrem seitlichen Verschieben durch die Rollen keiner Bremswirkung ausgesetzt sind, und daß die dem Verschieben der Hülsen dienenden Rollen einfache Bauelemente und somit praktisch nicht störanfällig sind.

Die Erfindung sei nun anhand eines Ausführungsbeispiels und der Figuren der Zeichnung näher erläutert. In der letzteren ist

Figur 1 ein Schnitt längs der Linie I-I der Fig. 2 einer mit einer erfindungsgemäßen Vorrichtung versehenen Kopsabziehmaschine,

Figur 2 ein Grundriß der Maschine nach Fig. 1, und

Figur 3 ein Einzelheiten zeigender Grundriß einer der in den Fig. 1 und 2 gezeigten Ausführungsform ähnlichen Ausführung.

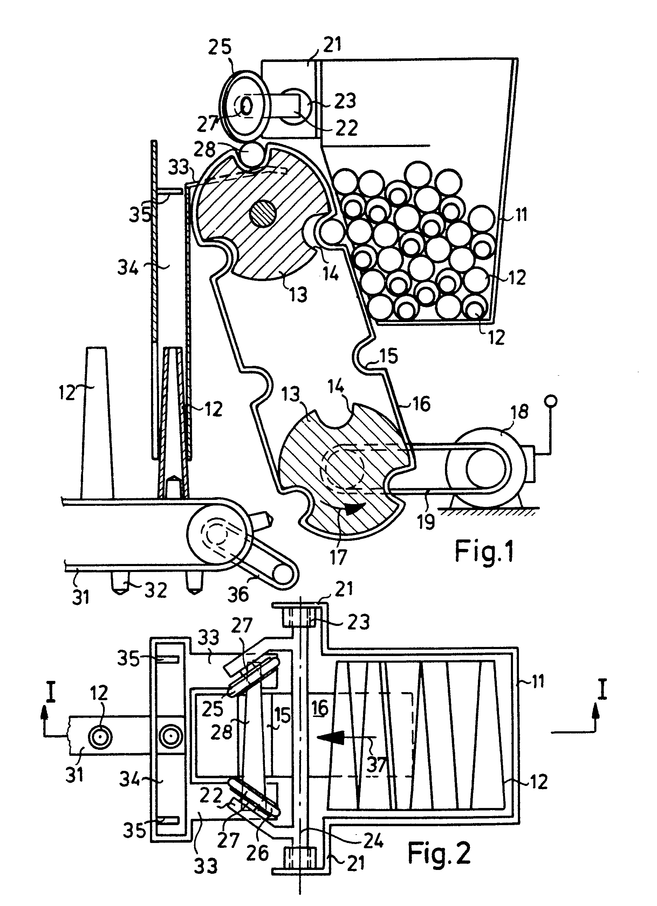

Die Fig. 1 und 2 zeigen einen Behälter 11, in welchem sich konisch geformte Hülsen 12 befinden. Diese sind im wesentlichen parallel zueinander, aber nicht endengleich angeordnet. Eine Fördereinrichtung umfaßt zwei Walzen 13, welche mit Mulden 14 versehen sind, und über welche ein mit muldenförmigen Taschen 15 ausgestattetes Förderband 15 läuft. Bei der Bewegung des Förderbandes 16 gelangen die Taschen 15 stets in Deckung mit den Mulden 14. Der Pfeil 17 gibt die Richtung der Bewegungen an. Der Antrieb erfolgt mittels eines Motors 18 über einen Antriebsriemen 19.

An Trägern 21 ist ein in sich fester Rahmen 22 in Lagern 23 schwenkbar gelagert. Das Schwenken erfolgt um eine Schenkachse 24. Der Rahmen 22 trägt zwei Rollen 25, 26, welche in der aus der Zeichnung ersichtlichen Weise schräg angeordnet sind. Die Rollen 25, 26 sind in den Rotationslagern 27 frei rotierbar. Die in der obersten Tasche 15 befindliche Hülse ist mit 28 bezeichnet.

Die Figuren 1 und 2 zeigen die Anwendung der Erfindung an einer Ringspinn- oder Ringzwirnmaschine. Ein Hülsentransportband der Maschine ist mit 31 bezeichnet. In vorgegebenen Abständen sind auf diesem Zapfen 32 angebracht, auf welche Hülsen 12 aufgesetzt werden. Die aufzusetzenden Hülsen 12 werden mittels des Förderbandes 16 auf einen Tisch 33 aufgelegt und gelangen von diesem in einen Fallkanal 34, in welchem zwei Richtstifte 35 angebracht sind. Das Transportband 31 wird von einem Antrieb 36 angetrieben.

Im Betrieb erfaßt jede sich am gegen das Förderband 16 hin offenen Behälter 11 vorbeibewegende Tasche 15 eine Hülse 12 und bewegt diese nach oben. Während sich eine solche Hülse, wie für die Hülse 28 gezeigt, unter den Rollen 25, 26 durchbewegt, kommt diejenige der beiden Rollen, welche sich in bezug auf die andere Rolle über einer Zone größeren Hülsendurchmessers befindet (in Fig. 1, 2 die Rolle 26) zum Zusammenwirken mit der Hülse 28. Von den Rollen 25, 26, welche in bezug auf die Bewegungsrichtung (Pfeil 37) der die Hülse 28 tragenden Fördertasche 15 schräggestellt sind, bewirkt die Rolle 26, welche mit der Hülse 28 in Kontakt kommt, ein Verschieben der Hülse 28 in der vom Hülsenfuß gegen die Hülsenspitze zeigenden Richtung. Damit ist der Sortiervorgang für diese Hülse 28 durchgeführt.

Bei der Weiterbewegung der Hülse 28 gelangt diese in der in ihrer Längsrichtung verschobenen Lage auf den Tisch 33, von welchem sie in den Fallschacht 34 geleitet wird. Sowie sie in die obere Öffnung desselben eintritt, stößt sie, da sie ja seitlich verschoben wurde, mit ihrer Hülsenspitze an den in bezug auf die Richtung des Pfeiles 37 rechten Stift 35. Dadurch gelangt die Hülse 28 mit dem Hülsenfuß voran in den Fallkanal 34 und auf den entsprechenden Zapfen 32 des Transportbandes 31.

Falls eine Hülse 12, deren Hülsenfuß sich auf der in bezug auf den Pfeil 37 rechten Seite befindet, unter die Rollen 25, 26 gefördert wird, so gelangt die Rolle 25 zum Zusammenwirken mit der Hülse. Als Folge davon wird diese Hülse durch den Sortiervorgang in bezug auf die durch den Pfeil 37 gegebene Richtung nach links verschoben. Die (sich in diesem Fall auf der linken Seite befindliche) Hülsenspitze trifft auf den linken Richtstift 35 auf, und dadurch wird sich die Hülse 12 wiederum mit dem Hülsenfuß voran durch den Schacht 34 bewegen.

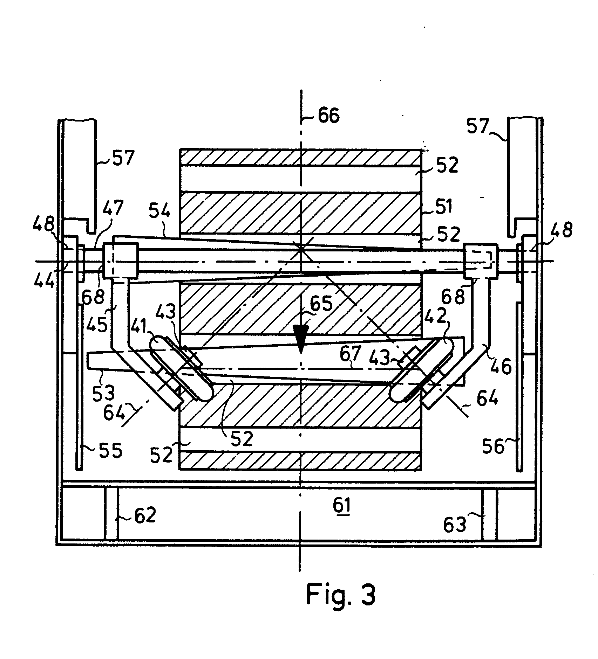

Um die erfindungsgemäße Sortiervorrichtung mit mehr Einzelheiten zu zeigen, als dies in den Fig. 1 und 2 möglich ist, sei auf die Fig. 3 verwiesen. Gemäß dieser sind wiederum zwei Rollen 41, 42 vorgesehen, welche in Rotationslagern 43 frei drehbar gelagert sind. Die letzteren sind von Armen 45, 46, welche mit der Welle 47 eine feste Einheit bzw. einen festen Rahmen bilden, getragen. Die Welle 47 ist um ihre Schwenkachse 44 schwenkbar und in Lagern 48 gelagert.

Die zum Fördern der Hülsen 53, 54 dienende Fördereinrichtung wird durch eine kreiszylindrische Trommel 51 gebildet, welche um eine nicht gezeichnete, zur Welle 47 parallele Achse rotierbar ist. Über dem Mantel der Trommel 51 sind in regelmäßigen Abständen voneinander Taschen 52 angebracht, welche zur Aufnahme von Hülsen dienen. In der Fig. 3 sind zwei sich in Taschen 52 befindliche Hülsen 53, 54 gezeichnet. Die Rollen 41, 42 kommen auf den schraffiert gezeichneten Mantelabschnitten zur Auflage und weisen beim Verschwenken des Rahmens 45, 46, 47 um die Schwenkachse 44 von diesen Mantelabschnitten stets denselben Abstand auf. Die Leitbleche 55, 56 bilden seitliche Begrunzungen für die Hülsen 53, 54. Die Leitbleche 57 dienen zum Führen der Hülsen zur Trommel 51. Schließlich ist noch ein Fallkanal 61 mit den beiden Richtstiften 62, 63 vorgesehen. Ein Hülsenbehälter für die anzuliefernden Hülsen ist der besseren Übersichtlichkeit wegen nicht gezeigt.

Im Betrieb der Vorrichtung nach Fig. 3 rotiert die Trommel 51 im durch den Pfeil 65 angegebenen Drehsinn und dabei wird aufeinanderfolgend eine Hülse in je eine Tasche 52 eingelegt. Solange sich die Rollen 41, 42 über einem schraffiert gezeichneten Mantelabschnitt der Trommel 51 befinden, sind beide Rollen 41, 42 auf diesem Mantelabschnitt aufgesetzt. Wenn sich die Hülse 53 unter den Rollen 41, 42 durchbewegt, so kommt die Zone ihres Hülsenfußes mit der Rolle 42 zum Zusammenwirken. Dadurch wird diese in Drehung versetzt und etwas angehoben. Da die Arme 45, 46 und die Welle 47 zusammen ein festes Gebilde bzw. einen starren Rahmen bilden, so wird auch die Rolle 41 angehoben, so daß diese mit der Hülse 53 nicht in Berührung kommt. Durch die Drehung der schräggestellten Rolle 42 erfährt die Hülse 53 eine Verschiebung in der Richtung gegen die Hülsenspitze hin. Sie wird dabei gegen das Leitblech 55 hin bewegt, womit der Sortiervorgang für die Hülse 53 durchgeführt ist.

Die vollständig unter den Rollen 41, 42 durchbewegte Hülse 53 gelangt schließlich zur Eingangsöffnung des Fallkanals 61, durch welchen sie nach Auftreffen ihrer Hülsenspitze auf den Richtstift 62 mit dem Hülsenfuß voran hinunterfällt.

Beim Durchgang der nachfolgenden Hülse 54 unter den Rollen 41, 42 sind deren Wirkungen vertauscht. Die Zone relativ großen Durchmessers im Bereich des Hülsenfußes der Hülse 54 kommt mit der Rolle 41 zum Zusammenwirken und versetzt diese in Rotation. Dadurch wird die Hülse 54 gegen das Leitblech 56 hin verschoben. Das Leitblech 56 dient zur allfälligen Begrenzung dieser seitlichen Bewegung.

Beim Eintreten der Hülse 54 in die Eingangsöffnung des Fallkanals 61 trifft die Hülsenspitze auf den Richtstift 63 auf, so daß die Hülse 54 ebenfalls mit ihrem Hülsenfuß voran in den Fallkanal fällt, wo somit die beiden Hülsen 53, 54 in endengleicher Lage eintreffen.

Falls ein Sortieren der Hülsen, wiederum in Kombination mit einem Fallkanal 61, erwünscht ist, bei welchem die Hülsen 53, 54 mit der Hülsenspitze voran in den Fallkanal 61 gelangen, so kann dies durch ein Vertauschen der Schräglage der Rollen 41, 42 erfolgen, d. h. in diesem Fall müssen diese so angeordnet sein, das sie in der Richtung des Pfeiles 65 nicht zusammenlaufen, sondern auseinandergerichtet sind.

Denkt man sich eine zu den Taschen 52 senkrecht stehende und diese halbierende Ebene 66, wie dies durch die gestrichelte Linie gezeigt ist, und zieht man zur Betrachtung noch die Rotationsachsen 64 der Rollen 41, 42 und die die Rotationslager 43 verbindende Gerade 67 hinzu, so ergibt sich folgendes :

Falls die Hülsen mit den Hülsenfüßen voran in den Fallkanal 61 eingeordnet werden sollen, so durchstoßen die Rotationsachsen 64 der Rollen 41, 42 die Ebene 66 in bezug auf die durch den Pfeil 65 gegebene Bewegungsrichtung der Fördertaschen 52 vor der die Rotationslager 43 verbindenden Geraden 67. Dabei müssen die zwei Rotationsachsen 64 die Ebene 66 nicht im gleichen Punkt durchstoßen. Umgekehrt, falls die Hülsen mit den Hülsenspitzen voran in den Fallkanal 61 eingeordnet werden sollen, so durchstoßen die Rotationsachsen 64 die Ebene 66 in bezug auf die durch den Pfeil 65 gegebene Richtung nach der Verbindungsgeraden 67.

In einer vorteilhaften Ausführungsform sind die Durchmesser der Rollen 41, 42 gleich groß und in bezug auf die Richtung des Pfeiles 65 um den gleichen Winkel schräggestellt. In diesem Fall durchstoßen die Rotationsachsen 64 die Ebene 66 im gleichen Punkt und bilden zusammen mit der Verbindungsgeraden 67 ein gleichschenkliges Dreieck, dessen gleiche Schenkel durch die Rotationsachsen 64 gebildet sind.

Die von der Verbindungsgeraden 67 mit den Rotationsachsen 64 gebildeten Winkel liegen bevorzugtermaßen zwischen 20 und 50 Grad.

Es versteht sich, daß die Rollen 25 und 41, 42 mindestens in ihrem Berührungsbereich mit den Hülsen 12, 28, 53, 54 vorteilhafterweise einen stark haftenden Belag besitzen, und daß die Oberflächen der Fördertaschen 15, 52 eine hohe Gleitfähigkeit aufweisen.

Eine weitere Ausführungsform besteht darin, daß z. B. die Arme 45 und 46 an ihren Knickstellen mit einem an sich bekannten Drehgelenk (nicht gezeichnet) versehen sind, welches gestattet, durch Verschwenken der mit den Rollen zusammengebauten Armteile in waagrechter Richtung, den Winkel der Rollen 41, 42 in bezug auf die Richtung des Pfeiles 65 wahlweise einzustellen und nach dem Einstellen die Armteile wieder fest miteinander zu verspannen.

Ebenso können in einer noch weiteren Ausführungsform die Halterungen 68 längs der Welle 47 verschiebbar ausgeführt und mit einer nicht gezeichneten Klemmschraube versehen sein, um nach dem wahlweisen Verschieben der Arme 45, 46 an eine gewünschte Stelle mit der Klemmschraube wieder mit der Welle festgeklemmt zu werden. Damit ergibt sich die Möglichkeit, die Rollen 41, 42 in vielfältiger Weise den Hülsen anzupassen.

**Ansprüche**

1. Vorrichtung zum Sortieren konischer Hülsen, welche eine Fördereinrichtung mit mindestens einer muldenförmigen Fördertasche (15) umfaßt, welche zusammen mit je einer einzelnen, in sie eingelegten Hülse (12) quer zu ihrer Längserstreckung bewegbar ist, und die Vorrichtung zudem ein Mittel umfaßt zum Verschieben der in die Fördertasche eingelegten Hülse in deren Längsrichtung in der einen bzw. in der entgegengesetzten Richtung in Abhängigkeit der relativen Lage von Hülsenfuß und Hülsenspitze, dadurch gekennzeichnet, daß dieses Mittel zwei auf die Fördereinrichtung (13, 16, 51) aufsetzbare und in Rotationslagern (27, 43) gelagerte Rollen (25, 26, 41, 42) umfaßt, daß die Rotationslager (27, 43) an einem um eine Schwenkachse (24, 44) schwenkbaren Rahmen (22, 45, 46, 47) in gleichen Abständen von der Schwenkachse (24, 44) angebracht sind, daß die Schwenkachse (24, 44) parallel zur die Fördertasche (15, 52) bildenden Mulde ist, und daß die Rotationsachsen (64) der Rollen (41, 42) auf derselben Seite einer die Rotationslager (27, 43) verbindenden Geraden (67) eine gedachte, senkrecht zur Fördertasche (15, 52) stehende und diese halbierende Ebene (66) durchstoßen.

2. Verwendung der Vorrichtung nach Anspruch 1, dadurch gekennzeichnet, daß diese zum endengleichen Zuführen von in einem Behälter (11) bereitgestellten, konischen Hülsen (12, 53, 54) zu einem Hülsentransportband (31) einer Ringspinn- oder Ringzwirnmaschine, dient.

3. Vorrichtung nach Anspruch 1, dadurch gekennzeichnet, daß die beiden Rollen (25, 26, 41, 42) gleiche Durchmesser aufweisen und deren Rotationsachsen (64) mit der die Rotationslager (43) verbindenden Geraden (67) ein gleichschenkliges Dreieck bilden, dessen gleiche Schenkel durch die Rotationsachsen (64) gebildet sind.

4. Vorrichtung nach Anspruch 1, dadurch gekennzeichnet, daß die Rotationsachsen (64) der Rollen (41, 42) die gedachte Ebene (66) in bezug auf die Bewegungsrichtung (65) der Fördertasche (52) vor der die Rotationslager (43) verbindenden Geraden (67) durchstoßen.

5. Vorrichtung nach Anspruch 1, dadurch gekennzeichnet, daß die Berührungsbereiche der Rollen (25, 26, 41, 42) mit den Hülsen (12, 28, 53, 54) einen stark haftenden Belag aufweisen.

6. Vorrichtung nach Anspruch 1, dadurch gekennzeichnet, daß die Fördertasche (15, 52) eine Oberfläche von hoher Gleitfähigkeit aufweist.

7. Vorrichtung nach Anspruch 3, dadurch gekennzeichnet, daß die Rotationsachsen (64) der Rollen (41, 42) mit der die Rotationslager (43) verbindenden Geraden (67) Winkel, die zwischen 20 und 50 Grad liegen, bilden.

8. Vorrichtung nach Anspruch 1, dadurch gekennzeichnet, daß die Fördereinrichtung zwei von einem Förderband (16) umschlungene, rotierbare Walzen (13) umfaßt, und daß das Förderband (16) in seiner Querrichtung verlaufende Taschen (15) aufweist, welche bei Rotation der Walzen (13) mit in diesen angebrachten Mulden (14) in Deckung gelangen.

9. Vorrichtung nach Anspruch 1, dadurch gekennzeichnet, daß der Rahmen (22, 45, 46, 47) Halterungen (68) umfaßt, mit welchen die Rotationslager (27, 43) zusammengebaut sind, welche in zur Schwenkachse (24, 44) paralleler Richtung verschiebbar und/oder horizontal schwenkbar und in gewählten Positionen festklemmbar sind.

## Claims

1. Device for sorting conical bobbins comprising a feed apparatus with at least one trough-shaped feed pocket (15) movable transversely to its length together with a respective individual bobbin (12) laid therein, the device further comprising a means to move the bobbin laid in the pocket in the longitudinal direction thereof in one direction or in the opposing direction in dependence upon the relative disposition of the bobbin foot and the bobbin tip, characterised in that this means comprises two rolls (25, 26, 41, 42) mountable on the feed apparatus (13, 16, 51) and supported in rotation bearings (27, 43), in that the rotation bearings (27, 43) are mounted on a frame (22, 45, 46, 47) pivotable about a pivot axis (24, 44) at equal spacings from the pivot axis (24, 44), in that the pivot axis (24, 44) is parallel to the through-forming the feed pocket (15, 52) and in that the rotation axes (64) of the rolls (41, 42) pass through an imaginary plane (66) normal to and bisecting the feed pocket (15, 52) on the same side of a straight line (67) joining the rotation bearings (27, 43).

2. Use of the device according to claim 1, characterised in that the device serves for feed of conical bobbins (12, 53, 54) from a container (11) to a bobbin conveyor belt (31) of a ring spinning or ring twisting machine with the bobbin ends similarly aligned.

3. Device according to claim 1, characterised in that the two rolls (25, 26, 41, 42) have the same diameters and their rotation axes (64) form an isosceles triangle with the straight line joining the rotation bearings (43), the equal legs of the triangle being formed by the rotation axes (64).

4. Device according to claim 1, characterised in that the rotation axes (64) of the rolls (41, 42) pass through the imaginary plane (66) in front of the straight line (67) joining the rotation bearings (43) considered with reference to the direction of movement (65) of the feed pocket (52).

5. Device according to claim 1, characterised in that the regions of contact of the rolls (25, 26, 41, 42) with the bobbins (12, 28, 53, 54) have a strongly adhering coating.

6. Device according to claim 1, characterised in that the feed pocket (15, 52) has a surface with good sliding properties.

7. Device according to claim 3, characterised in that the rotation axes (64) of the rolls (41, 42) form angles of between 20 and 50 degrees with the straight line (67) joining the rotation bearings (43).

8. Device according to claim 1, characterised in that the feed apparatus comprises two rotatable rollers (13) encircled by a conveyor belt (16) and in that the conveyor belt (16) has pockets (15) extending in its transverse direction, which pass into correspondence with troughs (14) in the rollers (13) due to rotation of the latter.

9. Device according to claim 1, characterised in that the frame (22, 45, 46, 47) has holders (68) with which the rotation bearings (27, 43) are assembled and which are movable in a direction parallel to the pivot axis (24, 44) and/or are horizontally pivotable and are securable in selected positions.

## Revendications

1. Dispositif pour mettre en ordre des fuseaux coniques, qui comprend un appareillage de transport avec au moins une poche de transport (15) en forme d'auge, qui est mobile, ensemble avec un seul fuseau (12) déposé dans la poche et placé perpendiculairement au sens de déplacement de la poche, et qui comprend de plus un moyen pour le déplacement du fuseau déposé dans la poche de transport dans le sens longitudinal de celle-ci, dans l'une respectivement dans la direction opposée, selon la position relative du pied de fuseau ou de la tête de fuseau, caractérisé par le fait que ce moyen comprend deux rouleaux (25, 26, 41, 42) qui peuvent être posés sur le dispositif de transport (13, 16, 51) et qui sont maintenus dans des paliers de rotation (27, 43), que des paliers de rotation (27, 43) sont disposés sur un cadre oscillant (22, 45, 46, 47) autour d'un axe d'oscillation (24, 44) à des distances égales de l'axe d'oscillation (24, 44), que l'axe d'oscillation (24, 44) est parallèle à l'auge qui forme la poche de transport (15, 52) et que les axes de rotation (64) des rouleaux (41, 42) traversent le plan pensé (66), perpendiculairement et médiant à la poche de transport (15, 52) du même côté d'une droite (67) qui relie les paliers de rotation (27, 43).

2. Utilisation du dispositif selon la revendication 1, caractérisée par le fait que celui-ci sert à amener des fuseaux coniques (12, 53, 54) à extrémités égales, et mis à disposition dans un récipient (11), vers une bande transporteuse de fuseaux (31) d'une machine à filer ou à retordre à anneaux.

3. Dispositif selon revendication 1, caractérisé par le fait que les deux rouleaux (25, 26, 41, 42) possèdent des diamètres égaux et que leurs axes de rotation (64) forment un triangle isocèle avec la droite (67) qui relie les paliers de rotation (43), triangle dont les côtés égaux sont formés par les axes de rotation (64).

4. Dispositif selon revendication 1, caractérisé par le fait que les axes de rotation (64) des rouleaux (41, 42) traversent le plan (66) pensé devant la droite (67) qui relie les paliers de rotation (43), par rapport au sens de déplacement (65) des poches de transport (52).

5. Dispositif selon revendication 1, caractérisé par le fait que les zones de contact des rouleaux (25, 26, 41, 42) avec les fuseaux (12, 28, 53, 54) possèdent une couche à forte adhésion.

6. Dispositif selon revendication 1, caractérisé par le fait que la poche de transport (15, 52) possède une surface avec un bon coefficient de glissement.

7. Dispositif selon revendication 3, caractérisé par le fait que les axes de rotation (64) des rouleaux (41, 42) forment des angles qui se situent entre 20 et 50°, avec la droite (67) qui relie les paliers de rotation (43).

8. Dispositif selon revendication 1, caractérisé par le fait que l'appareillage de transport comprend deux rouleaux (13) pouvant être mis en rotation et enveloppés par une bande transporteuse (16), et que la bande transporteuse (16) possède, dans son sens transversal, des poches (15) qui se juxtaposent avec des angles (14) appliqués dans ces rouleaux (13), lors de leur rotation.

9. Dispositif selon revendication 1, caractérisé par le fait que le cadre (22, 45, 46, 47) comprend des supports (68) avec lesquels les paliers de rotation (27, 43) sont montés ensemble, qui sont déplaçables et/ou basculables horizontalement en direction parallèle, par rapport à l'axe de pivotement (24, 44), et peuvent être fixés dans des positions choisies.

Fig.1

Fig.2

Fig. 3